# EUROPEAN PATENT APPLICATION

(11) **EP 2 020 548 A1**
(43) Date of publication of application: **04.02.2009**
(21) Application number: 08161321.8
(22) Date of filing: 29.07.2008
(51) Int. Cl.: F16K 13/00

(54) **Flameless relief valve**

(30) Priority: 02.08.2007 US 832678
(71) Applicant: Autoliv ASP, INC., Ogden, UT 84405 (US)
(72) Inventor: Cox, Mathew A., Centerville, UT 84014 (US); Smith, Bradley W., Plain City, UT 84404 (US)
(74) Representative: Branger, Jean-Yves

(57) **Abstract**

The invention relates to a relief valve (10) for use with a conduit (18) includes a housing (12) attached to the conduit (18) and an engagement member (16) slidably disposed within the housing (12) and movable between a retracted position and an extended position. The engagement member (16) pierces the conduit (18) when moved from the retracted position to the extended position.

## Description

Relief valves may be associated with a fluid conduit of a system to selectively vent a fluid disposed within the conduit. For example, a relief valve may be associated with a conduit of a closed-loop system such as, for example, a refrigeration system that selectively vents a refrigerant disposed within the conduit should a leak be detected within the system. The relief valve may vent such a closed-loop system to allow the refrigerant disposed within the refrigeration system to escape and be directed away from occupants disposed within an area to be heated and/or cooled.

Relief valves are currently being implemented in automotive heating, ventilation, and air conditioning (HVAC) systems to vent refrigerant contained within the automotive HVAC system, should a leak be detected anywhere within the system. The relief valve may be positioned within an engine compartment of a vehicle such that if a leak is detected, the relief valve vents the HVAC system and allows the refrigerant to escape into the engine compartment and away from a passenger compartment of the vehicle.

While conventional relief valves have proven to adequately vent refrigerant from closed-loop systems, such relief valves must be in fluid communication with a conduit of the closed-loop system and, therefore, increase the overall number of joints of the system. Increasing the number of joints of the system increases potential leak points and the overall cost of the system. To a more limited extent, conventional relief valves may include a pyrotechnic device that actuates a burst disk upon detection of a leak within the system to vent fluid disposed within the system. Actuation of such a pyrotechnic device utilizes the heat and pressure produced by the pyrotechnic device to facilitate opening of the burst disk.

The present invention proposes to solve these problems.

A first aspect of this invention relates to a relief valve for use with a conduit includes a housing attached to the conduit and an engagement member slidably disposed within the housing and movable between a retracted position and an extended position. The engagement member pierces the conduit when moved from the retracted position to the extended position.

According to specific but not limiting features of this relief valve
- it comprises:
   a housing attached to the conduit; and
   an engagement member slidably disposed within the housing and movable between a retracted position and an extended position, the engagement member piercing the conduit when moved from the retracted position to the extended position;
- it further comprises a pyrotechnic disposed within the housing and operable to selectively impart a force on the engagement member to move the engagement member from the retracted position to the extended position;
- it further comprises an initiator, preferably, a redrawn initiator including a cavity having at least a portion of the engagement member disposed therein, disposed within the housing and transmitting a force from the pyrotechnic to the engagement member to move the engagement member from the retracted position to the extended position;
- the pyrotechnic selectively applies a force to the redrawn initiator to unroll the initiator and reduce a volume of the cavity to move the engagement member from the retracted position to the extended position and pierce the conduit;
- the housing is fixedly attached to the conduit and is fluidly isolated from the conduit;
- the housing includes an aperture and a second aperture, the first aperture slidably receiving the engagement member and in fluid communication with an exterior surface of the conduit, the second aperture in fluid communication with the first aperture and fluidly isolated from the conduit;
- the engagement member selectively translates within the housing from the retracted position to the extended position within the first aperture to pierce the conduit;
- the second aperture is in fluid communication with the conduit when the engagement member is moved into the extended position and pierces the conduit and said valve comprises a tube attached to the housing and in fluid communication with the second aperture.

A further aspect of this invention concerns a closed loop system which includes a relief valve according to one of the preceding features.

The invention also concerns a method comprising:
- attaching a relief valve to an outer surface of a conduit of a system;
   detecting at least one operating parameter of the system;
   extending an engagement member from a retracted position to an extended position to pierce the conduit in response to the at least one operating parameter;
   forming a hole in the conduit due to engagement between the engagement member and the conduit; and
   venting fluid disposed within the conduit through the hole.

Further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.

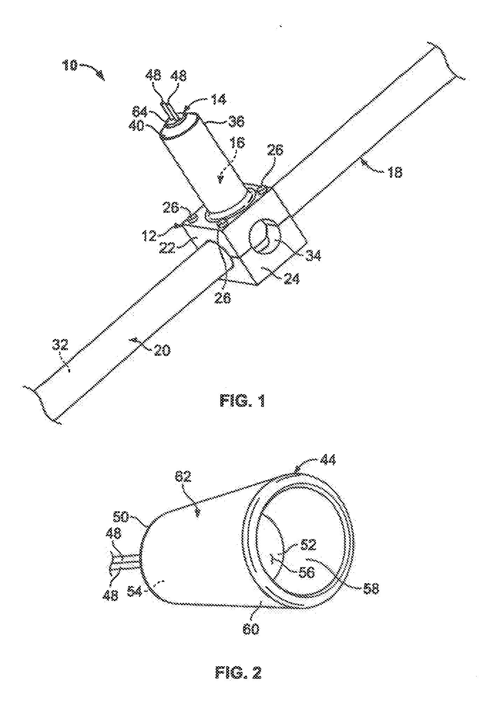

FIG. 1 is a perspective view of a relief valve in accordance with the principles of the present teachings, the relief valve shown operatively associated with a conduit.
FIG. 2 is a perspective view of an initiator for use with the relief valve of FIG. 1;
FIG. 3 is a cross-sectional view of the relief valve of FIG. 1 showing an engagement member in a pre-deployed state;
FIG. 4 is a cross-sectional view of the relief valve of FIG. 1 with an engagement member disposed between a pre-deployed state and a deployed state;
FIG. 5 is a cross-sectional view of the relief valve of FIG. 1 showing an engagement member in a deployed state; and
FIG. 6 is a perspective view of a vehicle incorporating the relief valve of FIG. 1 into a HVAC system.

The following description is merely exemplary in nature and is not intended to limit the present disclosure, application, or uses.

With reference to the figures, a relief-valve assembly 10 is provided and includes a housing 12, an actuation device 14, and an engagement element 16. The relief-valve assembly 10 may be used with a conduit 18 and may selectively pierce the conduit 18 to vent a fluid disposed within the conduit 18. The conduit 18 may be a component of a closed-loop system such as, for example, a refrigeration system or a heating, ventilation, and air conditioning (HVAC) system, to carry and distribute refrigerant within the refrigeration system or HVAC system. While the relief-valve assembly 10 will be described and shown in the drawings as being associated with a conduit 18 of a refrigeration system such as a HVAC system, the relief-valve assembly 10 of the present teachings could be used with any conduit to selectively vent a fluid disposed within the conduit. Furthermore, it should be understood that the term "fluid" refers to any fluid medium such as, but not limited to, a liquid and/or a gas.

The housing 12 may include a unitary construction that is slidably received on an exterior surface 20 of the conduit 18. Alternatively, the housing 12 may include a multi-part construction that is matingly received by the conduit 18 and attached to the exterior surface 20. While the housing 12 may include a unitary construction or a multi-piece construction, the housing 12 will be described and shown hereinafter in the drawings as including a multi-part construction.

The housing 12 includes a first half 22 and a second half 24 that are fixedly attached to one another by a plurality of fasteners 26 or any suitable attachment device. The conduit 18 is disposed generally between the first half 22 and the second half 24 when the first half 22 is attached to the second half 24 and is received within a first bore 28 of the housing 12. The first bore 28 extends generally along a length of the first half 22 and second half 24 and includes a diameter substantially equal to an outer diameter of the conduit 18 such that the conduit 18 is matingly received between the first half 22 and the second half 24 within the first bore 28.

Once the conduit 18 is disposed generally between the first half 22 and the second half 24 of the housing 12, the fasteners 26 or other attachment device may be inserted into one or both of the first half 22 and second half 24 to engage the other of the first half 22 and second half 24 to fixedly attach the housing 12 to the conduit 18. While the first bore 28 is described as including a diameter that is substantially equal to an outer diameter of the conduit 18, a surface 30 of the first bore 28 may engage the exterior surface 20 of the conduit 18 when the fasteners 26 are inserted in the first half 22 and second half 24 such that the first half 22 and second half 24 are clamped to the exterior surface 20 of the conduit 18. Clamping the first half 22 and second half 24 of the housing 12 to the exterior surface 20 of the conduit 18 prevents movement of the housing 12 relative to the conduit 18. Furthermore, while the housing 12 is attached to surface 20 of the conduit 18, the first bore 28 of the housing 12 is fluidly isolated from an interior 32 of the conduit 18.

The housing 12 may further include a second bore 34 formed through the housing 12. The second bore may be substantially perpendicular to the first bore 28. The second bore 34 may extend across a length of the housing 12 or, alternatively, may only extend across a portion of the housing 12. In either configuration, the second bore 34 is in fluid communication with the first bore 28, but is fluidly isolated from the interior 32 of the conduit 18.

An arm 36 extends generally from a junction of the first bore 28 and the second bore 34 and includes an opening 38 in fluid communication with the first bore 28 and a thin-walled section 40 disposed proximate to the opening 38. The first bore 28 extends along a length of the arm 36 from the opening 38 to the junction between the first bore 28 and the second bore 34. The arm 36 may be integrally formed with or fixedly attached to one of the first half 22 and second half 24. While the arm 36 may be integrally formed with or fixedly attached to one of the first half 22 and second half 24, the arm 36 will be described and shown in the drawings as being integrally formed with the first half 22 of the housing 12.

The actuation device 14 is disposed within the first half 22 of the housing 12 generally within the arm 36 and includes an initiator 44 and a pyrotechnic charge 46 having a pair of leads 48 electrically coupled thereto. The pyrotechnic charge 46 may be ignited by supplying an electrical charge to the pyrotechnic charge 46 via at least one of the leads 48.

The initiator 44 is disposed generally within the arm 36 between the pyrotechnic charge 46 and the engagement element 16 and includes a first end 50 disposed proximate to the pyrotechnic charge 46 and a second end 52 disposed adjacent to the engagement element 16. The first end 50 of the initiator 44 is open and may receive the pyrotechnic charge 46 therein such that the pyrotechnic charge 46 is disposed generally within an interior space of the initiator 44. The second end 52 of the initiator 44 is closed and includes an engagement surface 56 in an abutting relationship with the engagement element 16.

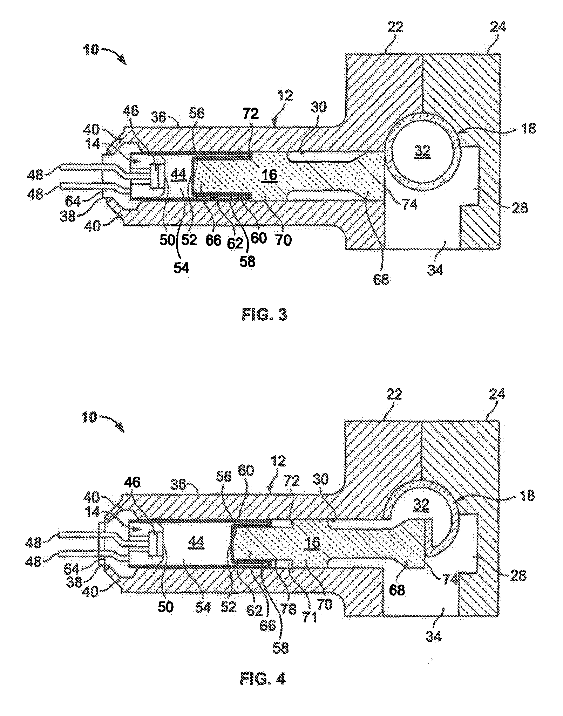

When the initiator 44 is in a pre-deployed state (FIG. 3), the second end 52 of the initiator 44 is drawn into the interior space 54 of the initiator 44 and forms a cavity 58. At least a portion of the engagement element 16 is received within the cavity 58 of the initiator 44 and is in an abutting relationship with the engagement surface 56.

During manufacturing of the initiator 44, walls 60 of the initiator 44 are drawn in to bring the second end 52 of the initiator 44 within the interior space 54 of the initiator 44 and generally towards the pyrotechnic charge 46. Therefore, the initiator 44 may be referred to as a "redrawn" initiator. While the second end 52 of the initiator 44 is redrawn such that the second end 52 is moved within the interior space 54 of the initiator 44 and towards the pyrotechnic charge 46, the interior space 54 of the initiator 44 is sealed generally between the pyrotechnic charge 46 and the second end 52. Therefore, when the pyrotechnic charge 46 is ignited, the byproduct of the pyrotechnic charge 46 is contained within the interior space 54 of the initiator 44 generally between the pyrotechnic charge 46 and the second end 52 of the initiator 44.

The initiator 44 may include an outer diameter substantially equal to an inner diameter of the first bore 28 such that an outer surface 62 of the initiator 44 is in an abutting relationship with the inner surface 30 of the first bore 28. The initiator 44 may also be contained within the first bore 28 of the arm 36 by deforming the thin-walled section 40 of the arm 36 once the engagement element 16, and pyrotechnic charge 46 are disposed within the first bore 28 of the arm 36. For example, the thin-walled section 40 may engage a housing 64 generally surrounding the pair of leads 48 to prevent removal of the initiator 44, pyrotechnic charge 46, and leads 48 from the first bore 28 of the housing 12.

The engagement element 16 is slidably received within the first bore 28 of the arm 36 and includes a first end 66, a second end 68, and a central portion 70 disposed generally between the first end 66 and second end 68. The first end 66 is received within the cavity 58 of the initiator 44 such that the first end 66 is in an abutting relationship with the engagement surface 56 of the second end 52 of the initiator 44. As such, the walls 60 of the initiator 44 at least partially axially surround the first end 66 of the engagement element 16 when the initiator 44 is in the pre-deployed state (FIG. 3). The first end 66 may include a length that is substantially equal to a length of the cavity 58 such that the walls 60 of the initiator 44 engage a contact surface 72 of the engagement element 16. The contact surface 72 may be disposed at a junction between the first end 66 and the central portion 70 of the engagement element 16 and extends from the second end 68 substantially perpendicularly.

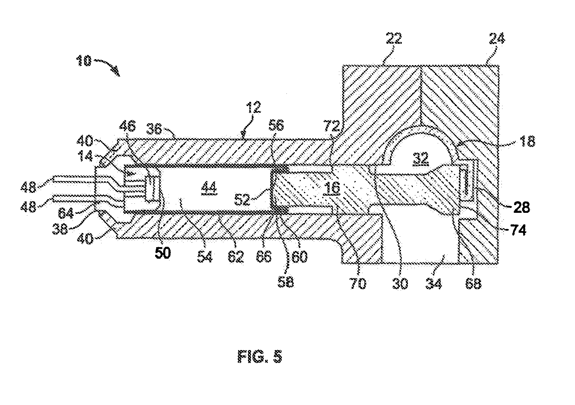

The second end 68 is disposed on an opposite end of the engagement element 16 from the first end 66 and may include a cutting feature 74. The cutting feature 74 may include a sharped edge and/or an inclined surface that, when engaged with the conduit 18, pierces the conduit 18. The central portion 70 is disposed generally between the first end 66 and the second end 68 of the engagement element 16 and includes an outer diameter that is substantially equal to the inner diameter of the arm 36. The central portion 70 is slidingly received within the first bore 28 of the arm 36 to allow the engagement element 16 to translate relative to the housing 12 between a retracted position (FIG. 3) and an extended position (FIG. 5).

With particular reference to FIG. 3, the relative thickness of the first end 66 when compared to the central portion 70 defines a gap 71 (FIG. 4) generally between an outer surface 78 of the first end 66 and the inner surface 30 of the first bore 28. The gap 71 formed between the outer surface 76 of the first end 66 and the surface 30 of the first bore 28 is substantially equal to two times a thickness of the walls 60 of the initiator 44. Providing a gap 71 disposed between the first end 66 of the engagement member 16 and the surface 30 of the first bore 28 allows the walls 60 of the initiator 44 to be rolled to form the cavity 58 while maintaining the outer surface 62 of the initiator 44 substantially flush with an outer surface 78 of the central portion 70.

With particular reference to the cross-sectional views of FIGS. 3-5, operation of the relief-valve assembly 10 will be described in detail. When the relief-valve assembly 10 is in a pre-deployed state (FIG. 3), the second end 52 of the initiator 44 is in close proximity to the pyrotechnic charge 46 such that the cavity 58 is substantially filled with the first end 66 of the engagement element 16. In this position, the first end 66 of the engagement element 16 is in contact with the engagement surface 56 of the initiator 44. In addition, the contact surface 72 of the engagement element 16 is in contact with the walls 60 of the initiator 44 at a point where the walls 60 are redrawn. In this position, the engagement element 16 is spaced apart from or just in contact with the exterior surface 20 of the conduit 18. As described above, the interior 32 of the conduit 18 is fluidly isolated from the first bore 28 and second bore 34 of the housing 12 when the relief-valve assembly 10 is in the pre-deployed state.

A force may be applied to the engagement element 16 to move the engagement element 16 from the retracted position (FIG. 3) to the extended position (FIG. 5) to contact and pierce the conduit 18. Movement of the engagement element 16 is accomplished by supplying an electrical charge to the pyrotechnic charge 46 via leads 48. The electrical charge ignites the pyrotechnic charge 46, thereby causing an increase in pressure within the interior space 54 of the initiator 44. The increase in pressure within the interior space 54 of the initiator 44 applies a force to the walls 60 of the initiator 44. Because the outer surface 62 of the initiator 44 is in an abutting relationship with the surface 30 of the first bore 28, the force applied to the walls 60 does not cause radial deformation of the walls 60 of the initiator 44, as the walls 60 are supported by the surface 30 of the first bore 28. However, the second end 52 is not supported by the surface 30 of the first bore 28 and is therefore moved relative to the arm 36 when the pressure within the interior space 54 is increased by initiation of the actuation device 14.

Movement of the second end 52 of the initiator 44 relative to the arm 36 causes concurrent movement of the engagement element 16 relative to the arm 36 (FIG. 4), as the engagement element 16 is in an abutting relationship with the second end 52 of the initiator 44.

Sufficient movement of the engagement element 16 by the second end 52 of the initiator 44 causes the cutting feature 74 of the second end 68 of the engagement element 16 to contact the exterior surface 20 of the conduit 18. Because the pyrotechnic charge 46 causes a rapid increase in pressure within the interior space 54 of the initiator 44, movement of the engagement element 16 towards the conduit 18 is very rapid. Such rapid movement of the engagement member 16 in combination with the location of the cutting feature 74 causes the engagement element 16 to pierce the conduit 18 and place the interior 32 of the conduit 18 in fluid communication with the first bore 28 and second bore 34 of the housing 12.

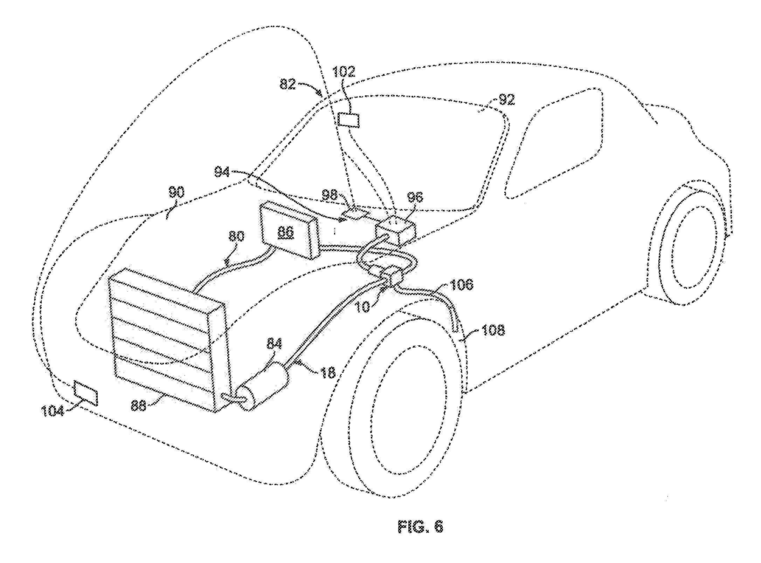

With particular reference to FIG. 6, the relief-valve assembly 10 is shown incorporated into a HVAC system 80 of a vehicle 82. The HVAC system 80 includes the conduit 18 extending in a closed-loop fashion between a compressor 84, an evaporator 86, and a condenser 88. The relief-valve assembly 10 is positioned along the conduit 18 generally within an engine compartment 90 to prevent fluid communication of a fluid disposed within the conduit 18 with a passenger compartment 92 if the engagement element 16 pierces the conduit 18.

The relief-valve assembly 10 may be in communication with a control module 94 such as a body controller 96 and/or a safety-system controller 98. In either configuration, the leads 48 are electrically coupled to the control module 94 to allow the control module 94 to selectively supply an electrical current to the pyrotechnic charge 46 via the leads 48 to control movement of the engagement element 16 from the retracted position to the extended position.

If the control module 94 includes the safety-system controller 98, the control module 94 may be in communication with a sensor assembly that monitors operating parameters of the vehicle 82. For example, the sensor assembly may include a refrigerant-detecting sensor 102 disposed within the passenger compartment 92 and/or an airbag sensor 104 that detects a vehicle crash event.

While the control module 94 may be in communication with a refrigerant-detecting sensor 102 and/or an airbag sensor 104, operation of the relief-valve assembly 10 will be described in conjunction with a system including both a refrigerant-detecting sensor 102 and an airbag sensor 104.

If the refrigerant-detecting sensor 102 detects a refrigerant leak within the passenger compartment 92, the control module 94 may send a signal to the pyrotechnic charge 46 to initiate the pyrotechnic charge 46 via the leads 48. As described above, supplying electrical charge to the leads 48 of the pyrotechnic charge 46 causes the pyrotechnic charge 46 to ignite and move the second end 52 of the initiator 44 relative to the arm 36. Such movement of the second end 52 of the initiator 44 relative to the arm 36 causes concurrent movement of the engagement element 16. Sufficient movement of the engagement element 16 relative to the arm 36 causes the engagement element 16 to pierce the conduit 18, thereby placing the interior 32 of the conduit 18 in fluid communication with the first bore 28 and the second bore 34 of the housing 12. Once the conduit 18 is pierced, fluid disposed within the conduit 18 is permitted to escape the conduit 18 and HVAC system 80 and related components 84, 86, 88 and vent through the second bore 34 of the housing 12.

If the airbag sensor 104 detects an impact event, the control module 94 may similarly send a signal to the pyrotechnic charge 46 via the leads 48 to ignite the pyrotechnic charge 46 to cause movement of the initiator 44. As previously described, movement of the second end 52 of the initiator 44 causes concurrent movement of the engagement element 16 relative to the arm 36 and causes the engagement element 16 to pierce the conduct 18. During the crash event, fluid was disposed within the conduit 18 and refrigerant and HVAC system 80 and related components 84, 86, 88 are vented into the engine compartment 90 of the vehicle 82 and are prevented from entering the passenger compartment 92.

A tube 106 may be attached to the housing 12 at the second bore 34 to place the second bore 34 of the housing 12 in fluid communication with a particular area of the engine compartment 90. For example, the tube 106 may extend from the second bore 34 of the housing 12 and to a wheel well 108, for example. Therefore, if the control module 94 causes the pyrotechnic charge 46 to fire and the engagement element 16 to pierce the conduit 18, refrigerant from the conduit 18 and HVAC system 80 will be vented to an area proximate the wheel well 108.

While specific examples have been described in the specification and illustrated in the drawings, it will be understood by those skilled in the art that various changes may be made and equivalence may be substituted for elements thereof without departing from the scope of the present teachings as defined in the claims. Furthermore, the mixing and matching of features, elements and/or functions between various examples may be expressly contemplated herein so that one skilled in the art would appreciate from the present teachings that features, elements and/or functions of one example may be incorporated into another example as appropriate, unless described otherwise above. Moreover, many modifications may be made to adapt a particular situation or material to the present teachings without departing from the essential scope thereof. Therefore, it may be intended that the present teachings not be limited to the particular examples illustrated by the drawings and described in the specification as the best mode of presently contemplated for carrying out the present teachings but that the scope of the present disclosure will include any embodiments following within the foregoing description and any appended claims.

## Claims

1. A relief valve (10) for use with a conduit (18), the relief valve (10) comprising:
a housing (12) attached to the conduit (18); and
an engagement member (16) slidably disposed within the housing (12) and movable between a retracted position and an extended position, the engagement member (16) piercing the conduit (18) when moved from the retracted position to the extended position.

2. The relief valve (10) according to Claim 1, further comprising a pyrotechnic (46) disposed within the housing (12) and operable to selectively impart a force on the engagement member (16) to move the engagement member (16) from the retracted position to the extended position.

3. The relief valve (10) according to Claim 2, further comprising an initiator (44), preferably, a redrawn initiator (44) including a cavity (58) having at least a portion of the engagement member (16) disposed therein, disposed within the housing (12) and transmitting a force from the pyrotechnic (46) to the engagement member (16) to move the engagement member (16) from the retracted position to the extended position.

4. The relief valve (10) according to Claim 3, wherein the pyrotechnic 46 selectively applies a force to the redrawn initiator (44) to unroll the initiator (44) and reduce a volume of the cavity (58) to move the engagement member (16) from the retracted position to the extended position and pierce the conduit (18).

5. The relief valve (10) according to one of the preceding claims, wherein the housing (12) is fixedly attached to the conduit (18) and is fluidly isolated from the conduit (18).

6. The relief valve (10) according to one of the preceding claims, wherein the housing (12) includes an aperture (28) and a second aperture (34), the first aperture (28) slidably receiving the engagement member (16) and in fluid communication with an exterior surface of the conduit (18), the second aperture (34) in fluid communication with the first aperture (28) and fluidly isolated from the conduit (18).

7. The relief valve (10) according to Claim 6, wherein the engagement member (16) selectively translates within the housing (12) from the retracted position to the extended position within the first aperture (34) to pierce the conduit 18.

8. The relief valve (10) according to Claim 6, wherein the second aperture (34) is in fluid communication with the conduit (18) when the engagement member (16) is moved into the extended position and pierces the conduit (18) and further comprising a tube (106) attached to the housing (12) and in fluid communication with the second aperture (34).

9. A closed loop system (80) including a relief valve (10) according to one of the preceding Claims.

10. A method comprising:
attaching a relief valve (10) to an outer surface of a conduit (18) of a system (80);
detecting at least one operating parameter of the system (80);
extending an engagement member (16) from a retracted position to an extended position to pierce the conduit (18) in response to the at least one operating parameter;
forming a hole in the conduit (18) due to engagement between the engagement member (16) and the conduit (18); and
venting fluid disposed within the conduit (18) through the hole.
